## Europäisches Patentamt

## European Patent Office

## Office européen des brevets

(19)

(11) EP 0 720 266 B1

(12) **EUROPÄISCHE PATENTSCHRIFT**

(45) Veröffentlichungstag und Bekanntmachung des Hinweises auf die Patenterteilung:
**07.01.1999 Patentblatt 1999/01**

(51) Int Cl.⁶: **H02H 5/04**, H02P 7/638

(21) Anmeldenummer: **95810675.9**

(22) Anmeldetag: **30.10.1995**

(54) **Verfahren und Vorrichtung zur Temperaturüberwachung bei Universalmotoren**

Process and device for temperature monitoring of a universal motor

Procédé et dispositif de surveillance de la température d'un moteur universel

(84) Benannte Vertragsstaaten:
**BE CH FR GB IT LI LU NL SE**

(30) Priorität: **29.12.1994 DE 4447145**

(43) Veröffentlichungstag der Anmeldung:
**03.07.1996 Patentblatt 1996/27**

(73) Patentinhaber: **HILTI Aktiengesellschaft**
**9494 Schaan (LI)**

(72) Erfinder:
• **Wissmach, Walter**
**D-80637 München (DE)**
• **Millauer, Wolfgang**
**D-81249 München (DE)**

(74) Vertreter: **Wildi, Roland et al**
**Hilti Aktiengesellschaft**
**Patentabteilung**
**9494 Schaan (LI)**

(56) Entgegenhaltungen:
**EP-A- 0 584 615**  **FR-A- 2 399 756**
**US-A- 4 503 370**

**Beschreibung**

Die Erfindung betrifft ein Verfahren und eine Vorrichtung zur Temperaturüberwachung bei Universalmotoren, die wenigstens eine in Reihe zu einem Anker liegende Feldwicklung aufweisen.

Bei Universalmotoren, insbesondere in Elektrowerkzeugen, besteht die Gefahr der Überhitzung durch übermäßige Belastung, die zu irreversiblen Motorschäden führen kann.

Dieser Überhitzungsgefahr wird üblicherweise dadurch begegnet. daß der Motorstrom bei Überschreiten eines Temperaturgrenzwerts abgeschaltet bzw. auf ungefährliche Werte begrenzt wird. Dazu muß die Temperatur der Motorwicklung entweder mittels eines Temperatursensors. beispielsweise eines in die Wicklung eingewickelten PTCs direkt gemessen oder indirekt aus meßtechnisch zugänglichen Größen ermittelt werden, beispielsweise über einen Kühlshunt.

Die direkte Meßmethode hat den Vorteil hoher Genauigkeit, ist jedoch mit einem hohen Aufwand an zusätzlichen Bauteilekosten, Montagearbeit und separater Verdrahtung verbunden. Indirekte Methoden umgehen diesen Aufwand in der Regel, haben allerdings die Nachteile, wenig genau zu sein und vor allem aufgrund inhärenter Zeitverzögerung die wahre Motortemperatur nicht ausreichend genau nachbilden zu können.

Bei den direkten Meßverfahren sind solche mit Meßfühler(n) bekannt, beispielsweise an den Motorwicklungen (meist der oder den Statorwicklung(en)) angebrachten Wärmefühlerelementen, wie PCTs, NTCs oder Thermokontakten, deren Jeweilige Ausgangssignale ausgewertet werden.

Ebenfalls als direkte Meßverfahren sind auch solche ohne Meßfühler üblich, wozu die bekannte, wenn auch nicht stark verbreitete Methode zählt, den ohmschen Widerstand wenigstens einer Motorwicklung zu messen, welcher ein nahezu direkt proportionales Maß für deren Temperatur ist. Widerstandsmeßverfahren dieser Art sind in vielfältigen Varianten bekannt und in der einschlägigen Literatur beschrieben. Schwierig ist es jedoch, diese Methode bei Wechselstrommotoren anzuwenden. da hier der ohmsche Widerstand von der Wechselstromimpedanz unterschieden werden muß.

Bei den indirekten Temperatur-Meßverfahren sind gerätetechnische als auch rechnerische Verfahren bekannt.

Bei den gerätetechnischen Verfahren wird versucht, die Motortemperatur durch geeignete verschaltete elektronische und/ oder elektrische Bauteile zu ermitteln. an denen ein der Motortemperatur entsprechendes Signal abgreifbar ist. Üblicherweise wird hierzu der durch den Motor fließende Strom und/oder die anliegende Spannung verarbeitet. Die einfachste und am weitesten verbreitete Art ist die Verwendung eines Thermoschalters, welcher in Serie zum Motor geschaltet ist und vom Motor aufgeheizt wird. Bei Überschreiten einer Grenztemperatur öffnet ein Kontakt und unterbricht den Stromkreis.

Bekannt in diesem Zusammenhang ist z.B. auch die Methode, einen Heizwiderstand vom Motorstrom durchfließen zu lassen, welcher in thermischem Kontakt mit einem temperaturempfindlichen Bauelement steht und so dimensioniert ist. daß sowohl die absolute Höhe als auch der Zeitverlauf seiner Temperatur der Motortemperatur möglichst gut entspricht. Durch Anordnen des Heizwiderstands im Motorkühlluftstrom kann eine weitere Verfeinerung des Verfahrens erreicht werden.

In der Druckschrift EP-A-0 584 615 ist beispielsweise ein Verfahren zur Temperaturüberwachung von mehrphasigen elektrischen Maschinen beschrieben, bei dem dem Motorwechselstrom eines Strangs, dort als "Meßstrang" bezeichnet, eine Gleichstromkomponente mit relativ zur effektiven Wechselstromkomponente geringer Größe überlagert wird. In allen drei Strängen des in der Regel dreiphasigen Motors liegen Meßshunts. Um den durch den eingespeisten Gleichstromanteil im Meßshunt des Meßstrangs hervorgerufenen Spannungsabfall bestimmen zu können, erfolgt eine Kompensation der in ihrem Effektivwert wesentlich größeren Wechselspannungskomponenten dadurch, daß in den beiden anderen Strängen die Meßshunts jeweils durch die Primärwicklung eines Übertragers überbrückt sind, deren sekundärseitige Wicklungen miteinander und außerdem mit dem Meßshunt in Reihe geschaltet sind. Eine Bestimmung der Temperatur der dem Meßstrang zugeordneten Wicklung erfolgt dann in einerAuswerteeinheit, welche den über dem Meßshunt durch die eingespeiste Gleichstromkomponente erzeugten Spannungsabfall bewertet.

Weiterhin ist aus der Druckschrift FR-A-2 399 756 ein Gleichstrommotor mit einer Temperaturüberwachungsschaltung bekannt, bei welcher die gefilterte, über der Wicklung abgreifbare Spannung hinsichtlich eines bestimmten Schwellenwerts bewertet und gegen einen über einen im Motorstromkreis liegenden Meßshunt gewonnenen Spannungswert verglichen wird. Aus dem Vergleich wird ein Signal zur Reduzierung oder gegebenenfalls Erhöhung des zulässigen Motorstroms in Abhängigkeit von der Wicklungstemperatur gewonnen.

Bei den rechnerischen Verfahren wird in der Regel die Motortemperatur anhand eines thermischen Modells nachgebildet. Dabei werden mittels eines digitalen Rechenwerks (häufig ein Mikrocontroller) leicht meßbare Größen. wie Spannung, Strom, Drehzahl und/oder Phasenanschnittwinkel so verarbeitet, daß eine Aussage über die Motortemperatur getroffen werden kann. Bekannt sind hierzu sowohl Verfahren, die empirisch ermittelte, motorspezifische, abgespeicherte Kennfeldtabellen benutzen (vergleiche DE 31 11 818 A1), als auch solche. die geschlossene mathematische Modelle berechnen (vergleiche DE 31 07 123 A1).

Der Erfindung liegt die Aufgabe zugrunde, ein auf der Widerstandsmessung beruhendes direktes Meßverfahren bzw. eine zu seiner Durchführung geeignete Einrichtung anzugeben, mit denen sich eine genau reproduzierbare Aussage über die Betriebstemperatur von Universalmotoren gewinnen läßt, insbesondere solchen. wie sie in Elektrowerkzeugen verwendet werden.

Ein Erfindungsgemäßes Verfahren zur Temperaturüberwachung von Universalmotoren ist in Anspruch 1 definiert.

Gegenüber den bekannten Widerstandsmeßverfahren weist das erfindungsgemäße Temperaturüberwachungsverfahren die Vorteile auf, daß sich einerseits die Statortemperatur sehr genau. und zwar ohne spezielle Meßfühler bestimmen läßt. Zum anderen kann das erfindungsgemäße Widerstandsmeßverfahren in idealer Weise mit vorhandenen und bekannten Phasenanschnittsteuerungen kombiniert werden.

Die Wirkungsweise des Verfahrens beruht auf einer Widerstandsmessung an einer der üblicherweise zwei Feldwicklungen. Um die Schwierigkeit zu vermeiden, den durch den Motor fließenden reinen Wechselstrom hierfür heranziehen zu müssen, wird dem Motorstrom ein geringer Gleichstromanteil überlagert. Dieser ruft an der Feldwicklung einen Gleichspannungsabfall $U_{fdc}$ hervor, der bei bekanntem Gleichstrom $I_{dc}$ direkt proportional zu dem ohmschen Widerstand $R_f$ der Feldwicklung und damit zu deren Temperatur ist:

$$U_{fdc} = I_{dc} \cdot R_f.$$

Dieser Gleichspannungsabfall läßt sich auf relativ einfache Weise messen und weiterverarbeiten.

Die zur Verwirklichung des erfindungsgemäßen Verfahrens benötigten schaltungstechnischen Mittel sind in den gebräuchlichen Motorelektroniken weitgehend enthalten. Konstruktiver Mehraufwand besteht nur in einem zusätzlichen Feldwicklungsanschluß an der Steuer- und Regelelektronik. Ein Montagemehraufwand fällt nicht an.

Eine erfindungsgemäße Vorrichtung zur Temperaturuberwachung bei Universalmotoren ist in Anspruch 2 definiert.

Die überlagerte Gleichstromkomponente wird vorzugsweise mittels eines integrierten Stromreglers konstant gehalten, der mit der Phasenanschnittsteuerung gekoppelt ist und durch die erfaßte Vergleichs-Gleichgröße als Istgröße beaufschlagt ist.

Bei der zweiten bzw. dritten elektronischen Baugruppe handelt es sich vorzugsweise um einen Spannungsverstärker, der eingangsseitig durch die über der Feldwicklung einerseits bzw. dem Strommeßshunt andererseits abgreifbare Spannung beaufschlagt ist und mit einer Filtereinheit zur Abtrennung der Wechselstromkomponente gekoppelt ist.

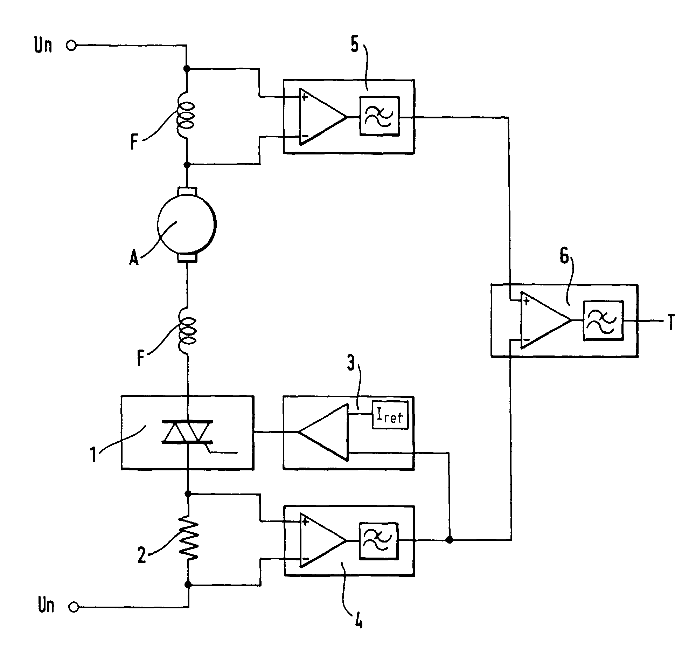

Ein Ausführungsbeispiel der Erfindung wird nachfolgend unter Bezug auf die Zeichnung erläutert. Die **einzige Figur** zeigt das Schaltprinzip einer Schaltungsanordnung zur Temperaturüberwachung in Universalmotoren mit erfindungsgemäßen Merkmalen.

Das Prinzipschaltbild zeigt einen Wechselstrom-Universalmotor mit einem Anker A und den Feldwicklungen F sowie mit einer Phasenanschnittsteuerung 1, wie sie üblicherweise verwendet wird, um die Drehzahl des Motors zu verstellen oder zu regeln. Im Motorstromkreis liegt weiterhin ein Strommeßshunt 2, der in die Baugruppe der Phasenanschnittsteuerung 1 integriert sein kann. In der Regel sind alle diese Elemente oder Baugruppen in einem Elektrowerkzeug bereits vorhanden. Netzanschlußklemmen sind mit Un bezeichnet.

Erfindungsgemäß ergänzt wird die Anordnung durch einen Stromregler 3, der in nachfolgend näher erläuterter Weise dem Motorwechselstrom eine Gleichstromkomponente geringer aber konstanter Größe überlagert. Der Regler 3 ist eingangsseitig durch einen vom Strommeßshunt 2 abgeleiteten Strom-Istwert beaufschlagt, der nach Verstärkung und Filterung in einem Filter-Verstärker 4 vom Wechselstromanteil befreit worden ist.

In ähnlicher Weise wie am Strommeßshunt 2 wird der Spannungsabfall an einer der beiden Feldwicklungen F mittels eines (Feldspannungs-) Verstärkerfilters 5 gemessen. Durch die Filterung wird der Wechselspannungsanteil eliminiert und es verbleibt ein durch den überlagerten Gleichstrom hervorgerufener Gleichspannungsanteil, welcher direkt proportional ist zu dem Gleichstrom und zu dem ohmschen Widerstand der Feldwicklung F.

Vergleicht man die Gleichspannungsabfälle am temperaturinvarianten Temperaturmeßshunt 2 und an der temperaturabhängigen Feldwicklung F mittels eines Komparators 6, so erhält man bei geeigneter Wahl der Verstärkungsfaktoren ein Schaltsignal T, welches das Erreichen einer bestimmten, vorgebbaren Temperatur der Feldwicklung F signalisiert. Dieses Schaltsignal kann auf unterschiedlichste Weise weiterverarbeitet werden, z.B. zur optischen oder akustischen Warnanzeige, zum Abschalten des Geräts und/oder zum Begrenzen des Motorstroms auf einen unkritischen Wert.

Die einzelnen Baugruppen der in ihrer Funktion zuvor kurz erläuterten Schaltungsanordnung werden nachfolgend näher beschrieben.

Die **Phasenanschnittsteuerung 1** besteht in der Regel aus einem Triac und der zugehörigen Ansteuerschaltung, welche in Abhängigkeit von einer Steuergröße den Zündwinkel des Triacs und damit die effektive Motorspannung vorgibt. Die Steuergröße kann ihrerseits Ausgangsgröße eines Drehzahl- und/oder Stromreglers sein. Für die Ansteuerschaltung gibt es eine Vielzahl von dem Fachmann bekannte Ausführungsformen in diskretem Schaltungsaufbau oder als integrierte Schaltungen.

Der **Strommeßshunt 2** besteht in der Regel aus einem (relativ niederohmigen) Widerstand, an welchem eine dem Motorstrom direkt proportionale Meßspannung abfällt. Als Widerstandsmaterial werden üblicherweise nahezu temperaturunabhängige Metallegierungen gewählt. z.B. Konstantan oder ähnliche bekannte Materialien.

Der **Stromregler 3** ist im Prinzip für das Funktionieren der erfindungsgemäßen Temperaturüberwachung nicht unbedingt erforderlich. Dies deshalb nicht, weil im Komparator 6 die Gleichspannungsabfälle am Strommeßshunt 2 und an der Feldwicklung F verglichen, d.h. subtrahiert werden. Daher arbeitet die Schaltung innerhalb vernünftiger Grenzen grundsätzlich unabhängig von der Größe des Gleichstromanteils. Schwierigkeiten können jedoch an den Aussteuergrenzen der Phasenanschnittsteuerung 1 und in bestimmten denkbaren Belastungsfällen entstehen, insbesondere bei sehr kleiner Motorspannung oder bei voller Motorspannung. In diesem Fall ist es schwierig einen ausreichend großen Gleichstromanteil zu erhalten. Eine einfache (jedoch nicht die einzige) Möglichkeit diese Schwierigkeit zu umgehen besteht darin, den Gleichstrom auf einem ausreichen großen, jedoch vergleichsweise zum Wechselstrom kleinen Wert konstant zu halten. Dies wird durch den Stromregler 3 gewährleistet, der einen vorgebbaren, konstanten Sollwert $I_{ref}$ mit dem vom Shuntspannungsverstärker und -filter 4 gelieferten Gleichspannungs-Istwert (DC-Istwert) vergleicht. In Abhängigkeit von der sich daraus ergebenden Differenz wird ein Steuersignal gebildet, welches in der Phasenanschnittsteuerung 1 eine Vergrößerung oder Verkleinerung des Gleichstromanteils bewirkt.

Die Schaltungsgruppe des **Filter-Verstärkers 4** (Shuntspannungsverstärker und -filter) besteht funktional aus zwei Teilen, nämlich zum einen aus einem Tiefpaßfilter, dessen Grenzfrequenz klein gegenüber der Netzspannungsfrequenz ist, so daß der Wechselanteil des Motorstroms bzw. der zugehörigen Meßspannung ausreichend gut gedämpft wird. Zum anderen enthält diese Schaltungsgruppe einen Verstärker, der das vergleichsweise kleine DC-Signal zur Weiterverarbeitung in nachgeschalteten Stufen verstärkt. Schaltungstechnisch läßt sich beides zusammen durch einen Verstärker mit Widerstands/Kondensatorbeschaltung realisieren.

Die Schaltungsgruppe des **Feldspannungsverstärker und -filters 5** ist in Funktion und Aufbau grundsätzlich identisch mit dem oben beschriebenen Shuntspannungsverstärker und -filter 4. Dadurch daß die abfallenden Spannungsanteile (sowohl Wechsel- als auch Gleichanteil) wesentlich größer sind als diejenigen am Strommeßshunt 2 ist jedoch die schaltungstechnische Auslegung der Verstärkerbeschaltungselemente anders zu wählen. Mißt man, wie im dargestellten Schaltbild gezeichnet, die Größen an der oberen Feldspule F, so ist in der Regel ein Differenzverstärker notwendig. Es wäre jedoch auch möglich. an der unteren Feldspule F zu messen, da beide vom selben Strom durchflossen sind und normalerweise identisch aufgebaut sind. In einem solchen Fall kann auf einen Differenzverstärker verzichtet werden.

Der **Komparator** 6 mit Zeitglied vergleicht die DC-Spannungsabfälle am Strommeßshunt 2 und der Feldwicklung F. Da auf beiden Signalen trotz Filterung eine nicht zu vermeidende Restwelligkeit vorhanden ist, würde ein reiner Komparator in der Nähe des Umschaltpunkts, d.h. dort, wo die Grenztemperatur erreicht ist, ständig hin- und herschalten. Um dies zu eliminieren, wird, wie im Schaltbild angedeutet, ein Tiefpaßfilter mit sehr niedriger Grenzfrequenz nachgeschaltet. Bei einer vorteilhaften Ausführungsform für beide Schaltungsteile wird ein subtrahierender Integrator verwendet. Dieser subtrahiert die beiden Eingangssignale und integriert die Differenz. Das Ausgangssignal nimmt stationär trotz der welligen Eingangssignale nur zwei verschiedene Zustände an, die der oberen bzw. unteren Aussteuergrenze entsprechen, und kann somit wie ein Binärsignal weiterverarbeitet werden. Ein weiterer Vorteil dieser Funktionsgruppe besteht darin, nicht sofort bei Erreichen der Temperaturgrenze zu reagieren, sondern eine gewünschte, dem zu schützenden Antrieb angepaßte Zeitverzögerung zu gewährleisten. wobei eine Kurzzeitüberlast toleriert wird. Die Funktion der Zeitverzögerung mit Kurzzeitüberlast läßt sich auch auf andere Weise verwirklichen, z.B. durch Verwendung einer monostabilen Kippschaltung (Monoflop).

Für den Fachmann ist ersichtlich, daß die geschilderte Schaltungsanordnung so in die Phasenanschnittsteuerung eingreift, daß die positiven und negativen Spannungshalbwellen ungleich groß werden. Daraus resultiert ein Gleichspannungsanteil der Motorspannung. welcher einen Gleichstromanteil zur Folge hat. Eine vorteilhafte Möglichkeit dies zu tun besteht darin, die Zündwinkel für den Triac in der Phasenanschnittsteuerung 1 (vergleiche obige Erläuterung) für die positive und negative Spannungshalbwelle (die normalerweise gleich sind) ungleich zu machen. Man kann hierzu in eine bei den meisten Phasenanschnittsteuerungen vorhandene und zugängliche Signalspannung, welche den Zündwinkel beeinflußt, eingreifen. Andere, wenn auch weniger vorteilhafte Möglichkeiten den Gleichstromanteil zu erzeugen, bestehen darin, z.B. ganze Halbwellen einer Polarität periodisch auszublenden oder durch geeignete Schaltungselemente, wie Zenerdioden, Dioden-Widerstandskombinationen oder dergleichen im Motorstrompfad für unterschiedliche Stromrichtungen unterschiedliche Spannungsabfälle zu erzeugen.

**Patentansprüche**

1. Verfahren zur Temperaturüberwachung von Universalmotoren mit Phasenanschnittsteuerung, bei welchem

   - dem Motorwechselstrom über die Phasenanschnittsteuerung eine für alle Belastungsfälle konstante Gleichstromkomponente ($I_{DC}$) mit relativ zur effektiven Wechselstromkomponente geringer Größe überlagert wird,
   - der Spannungsabfall an einer Feldwicklung (F) des Motors erfaßt, vom Wechselspannungsanteil durch Tiefpaßfilterung befreit und als eine zum temperaturabhängigen ohm'schen Widerstand der Feldwicklung proportionale Gleichspannungskomponente ($U_{fdc}$) gegen eine temperaturinvariante Gleichspannungskomponente verglichen (6) wird, die in analoger Weise über einen vom Motorwechselstrom einschließlich überlagerter konstanter Gleichstromkomponente durchflossenen Strommeßshunt (2) gewonnen und vom Wechselspannungsanteil durch Tiefpaßfilterung befreit wird.

2. Vorrichtung zur Temperaturüberwachung bei Universalmotoren mit

- wenigstens einer in Reihe zu einem Anker (A) liegenden Feldwicklung (F) und Phasenanschnittsteuerung,
- einer ersten elektronischen Baugruppe (3), welche über die Phasenanschnittsteuerung (1) dem die Feldwicklung (F) und den Anker (A) durchfließenden Motorstrom eine für alle Belastungsfälle konstante Gleichstromkomponente mit zur effektiven Wechselstromkomponente des Motorstroms geringer Größe überlagert.
- einer zweiten elektronischen Baugruppe (5), welche die Spannung über der Feldwicklung (F) erfaßt, den Wechselspannungsanteil mittels eines Tiefpaßfilters abtrennt und eine dem temperaturabhängigen ohm'schen Widerstand der Feldwicklung (F) entsprechende Gleichgröße ($U_{fdc}$) an einen ersten Eingang eines Komparators (6) liefert,
- einem vom Motorstrom einschließlich überlagerter konstanter Gleichstromkomponente durchflossenen temperaturinvarianten Strommeßshunt (2), über dem durch eine dritte elektronische Baugruppe (4) eine Spannung abgreifbar ist, die nach Abtrennung des Wechselspannunsanteils durch ein Tiefpaßfilter als Vergleichs-Gleichgröße an einen zweiten Eingang des Komparators (6) gelegt ist, der ausgangsseitig ein mit der Temperatur der Feldwicklung (F) veränderliches Signal abgibt.

3. Vorrichtung nach Anspruch 2 oder 3, **dadurch gekennzeichnet**, daß die zweite und die dritte elektronische Baugruppe (5 bzw. 4) jeweils ein Spannungsverstärker mit zur Abtrennung der Wechselstromkomponente geeigneter Tiefpaß-Filtereinheit ist.

4. Vorrichtung nach Anspruch 2 oder 3, **dadurch gekennzeichnet**, daß der Komparator (5) ein Zeitglied enthält.

5. Vorrichtung nach Anspruch 2, **dadurch gekennzeichnet,** daß die Phasenanschnittsteuerung (1) durch einen Stromregler (3) beaufschlagt ist, dem die von der durch die dritte elektronische Baugruppe (4) erfaßten Vergleichs-Gleichgröße als Ist-Größe zugeführt ist und der über die Phasenanschnittsteuerung (1) dem Motorstrom die konstante Gleichstromkomponente überlagert.

**Claims**

1. A method of monitoring the temperature of universal motors with phase control, in which

- a DC current component ($I_{DC}$), which is constant for all loading situations and which is of lesser magnitude than the effective AC current component, is superimposed on the motor AC current via the phase control system,
- the voltage drop across a field winding (F) of the motor is determined, is freed from its AC voltage component by low-pass filtering, and is compared (6), as a DC voltage component ($U_{fdc}$) which is proportional to the temperature-dependent ohmic resistance of the field winding, with a temperature-invariant DC voltage component, which is freed from its AC voltage component by low-pass filtering and which is produced in an analogous manner via a current measuring shunt (2) through which the motor AC current, including the superimposed constant DC current component, flows.

2. An apparatus for monitoring the temperature of universal motors, having

- at least one field winding (F) and phase control system connected in series with an armature (A),
- a first electronic componentry module (3), which superimposes, via the phase control system (1), a DC current component, which is constant for all loading situations and which is of lesser magnitude than the effective AC current component of the motor current, on the motor current which flows through the field winding (F) and the armature (A),
- a second electronic componentry module (5), which determines the voltage across the field winding (F), separates the AC voltage component by means of a low-pass filter. and supplies a DC quantity ($U_{fdc}$), which corresponds to the temperature-dependent ohmic resistance of the field winding (F), to a first input of a comparator (6).
- a temperature-invariant current measuring shunt (2), though which the motor current, including the superimposed constant DC current component, flows, and via which a voltage can be tapped by a third electronic componentry module (4), which voltage, after the separation of the AC voltage component by a low-pass filter, is applied as a comparison DC quantity to a second input of the comparator (6), the output of which emits a signal which varies with the temperature of the field winding (F).

3. An apparatus according to claim 2 or 3, **characterised in that** the second and the third electronic componentry modules (5 and 4, respectively) each constitute a voltage amplifier comprising a low-pass filter unit suitable for separating the AC current component.

4. An apparatus according to claim 2 or 3, **characterised in that** the comparator (5) contains a time function element.

5. An apparatus according to claim 2, **characterised in that** the phase control system (1) is acted upon by a current regulator (3), to which the comparative DC quantity which is determined by the third electronic componentry module (4) is fed as an instantaneous quantity, and which superimposes the constant DC current component on the motor current via the phase control system (1).

## Revendications

1. Procédé de contrôle de la température de moteurs universels avec commande par déphasage, dans lequel

   - au courant alternatif du moteur est superposée, par la commande par déphasage, une composante de courant continu constante ($I_{DC}$) pour tous les cas de charge, d'une grandeur inférieure à la composante de courant alternatif effective,
   - la chute de tension sur un enroulement inducteur (F) du moteur est enregistrée, libérée de la composante de tension alternative par un filtrage passe-bas et est comparée (6), en tant que composante de tension continue ($U_{fdc}$) proportionnelle à la résistance ohmique dépendante de la température de l'enroulement inducteur, à une composante de tension continue indépendante de la température, qui est obtenue de la même manière, par un shunt de mesure de courant (2) traversé par le courant alternatif du moteur, y compris par la composante de courant continu constante superposée, et est libérée de la composante de tension alternative par un filtrage passe-bas.

2. Dispositif de surveillance de la température de moteurs universels comportant

   - au moins un enroulement inducteur (F) en série avec un induit (A) et commande par déphasage,
   - un premier ensemble électronique (3), qui superpose, par la commande par déphasage (1), au courant du moteur traversant l'enroulement inducteur (F) et l'induit (A), une composante de courant continu constante dans tous les cas de charge, de grandeur inférieure à la composante de courant alternatif effective du courant du moteur,
   - un deuxième ensemble électronique (5), qui enregistre la tension par l'intermédiaire de l'enroulement inducteur (F), qui sépare la composante de tension alternative au moyen d'un filtre passe-bas et qui fournit une grandeur équivalente ($U_{fdc}$), correspondant à la résistance ohmique dépendant de la température de l'enroulement inducteur (F), à une première entrée d'un comparateur (6),
   - un shunt de mesure de courant (2), ne dépendant pas de la température, traversé par le courant du moteur y compris par la composante de courant continu constante superposée, par l'intermédiaire duquel un troisième ensemble électronique (4) peut prélever une tension, qui après séparation de la composante de tension alternative par un filtre passe-bas, est appliquée, en tant que grandeur équivalente de comparaison, à une deuxième entrée du comparateur (6), qui délivre, côté sortie, un signal variant avec la température de l'enroulement inducteur (F).

3. Dispositif selon la revendication 2 ou 3, caractérisé en ce que le deuxième et le troisième ensembles électroniques respectivement (5 et 4) sont chacun un amplificateur de tension avec unité à filtre passe-bas, convenant à la séparation de composantes de courant alternatif.

4. Dispositif selon la revendication 2 ou 3, caractérisé en ce que le comparateur (5) contient un organe de temporisation.

5. Dispositif selon la revendication 2, caractérisé en ce que la commande par déphasage (1) est sollicitée par un régulateur de courant (3) auquel est envoyée, en tant que grandeur réelle, la grandeur équivalente de comparaison, enregistrée par le troisième ensemble électronique (4), et qui superpose la composante de courant continu constante au courant du moteur, par la commande par déphasage (1).